# EUROPEAN PATENT SPECIFICATION

(11) **EP 3 064 956 B1**
(45) Date of publication and mention of the grant of the patent: **02.09.2020**
(21) Application number: 14814677.2
(22) Date of filing: 24.03.2014
(51) Int. Cl.: G01S 7/282, G01S 7/35, H01Q 3/26

(54) **FULLY OPTICALLY CONTROLLED PHASED ARRAY RADAR TRANSMITTER**
VOLLSTÄNDIG OPTISCH GESTEUERTER PHASENGEREGELTER RADARSENDER
ÉMETTEUR DE RADAR À ÉLÉMENTS EN RÉSEAU PHASÉ COMMANDÉ TOTALEMENT OPTIQUEMENT

(30) Priority: 26.02.2014 CN 201410065532
(43) Date of publication of application: 07.09.2016
(73) Proprietor: Shanghai Jiao Tong University, Shanghai 200240 (CN)
(72) Inventor: ZOU, Weiwen, Shanghai 200240 (CN); LIU, Chenjun, Shanghai 200240 (CN); YU, Anliang, Shanghai 200240 (CN); CHEN, Jianping, Shanghai 200240 (CN)
(74) Representative: Proi World Intellectual Property GmbH
(86) International application number: PCT/CN2014/000318
(87) International publication number: WO 2015/127575

(56) References cited:
- WO-A1-2009/121967
- CN-A- 1 815 338
- CN-A- 102 724 012
- CN-A- 103 346 469
- CN-A- 103 346 469
- US-A- 5 307 073
- US-A1- 2006 067 709
- US-A1- 2012 250 028
- US-B1- 6 426 721

## Description

### Field of Invention

The present invention relates to methods and devices in the fields of microwave photonics and radar, and in particular relates to a wholly optically controlled phased array radar transmitter with integration of optical time delay networks and optoelectronic oscillators based on multi-wavelength optical sources and optical time delay networks.

### Background Art

A phased array antenna system finds wide applications in the fields of radar, communications and electronic countermeasure systems, the indispensible integral parts thereof being high-quality broad-band tunable microwave signal sources, broad-band radar baseband signal sources and phase delay beam-forming networks. With traditional electronically controlled phased array antennas, radar baseband signals, after being modulated into microwave signals, amplified, power balanced, phase-shifted via placement of microwave phase shifters on the arrays or units, and after changing of phase relationships among antenna units, finally form into microwave beam signals. However, in one aspect, traditional electronically controlled phased array radar is limited by the 'aperture effect' of phased array radar, thereby limiting radar bandwidth, high resolution measurement, radar imaging and spread spectrum signals in applications. On the other aspect, for traditional phased array radar (including optically controlled ones), restrictions exist, such as limited scope of tunable microwave signals, limited product of time and bandwidth of radar signals, and big phase noise. At certain deviated frequencies, bad phase noise will result in the returned signals being concealed in the phase noise of the carrier wave, and therefore in the failure of detection of the detected object.

With the development of microwave photonics technology and its wide applications in the radar field, restrictions on aperture fill time in traditional phased array antenna is effectively overcome by means of true time delay line technology. Optically controlled wave beam forming networks based on true time delay can be used for scanning of antenna wave beams, with the benefits of large instantaneous bandwidth, no wave beam squinting effect, low loss, small dimension, anti-electromagnetic interference, and long detection distance, and has become an important direction for phased array radar development. At the mean time, optoelectronic oscillators are advantageous for microwave signals with low phase noise and large scope of tunable frequency, and have wide potential usage for optical signal processing, radar, communications, and bio-imaging detection.

Optically controlled phased array radar of current research mostly adopt architectures similar to those in [K. Garenaux, T. Merlet, M. Alouini, et al., "Recent breakthroughs in RF photonics for radar systems", Aerospace and Electronic Systems Magazine, IEEE, vol. 22, pp. 3-8, 2007.]. The transmission link thereof works as follows: corresponding carrier signals and modulated signals generated by the microwave signal generator are electro-optically transformed via a modulator, passed through a delay network structure, transformed from optical signals to electric signals via an optoelectronic detector, and then transmitted via microwave T/R components and antennas. The receiving circuit thereof on the other hand receives reflected signals via microwave antennas and T/R components, conducts frequency mixing, conducts phase compensation by reusing the delay network of the transmission line, and finally processes the signals.

For prior art series delay systems of optically controlled phased array radar, the delay schemes based on multi-wavelengths have large delay scope, power cycle fading resulting from non-dispersion, and thus laser arrays or multi-wavelength lasers on their front end are in need. Laser arrays or multi-wavelength lasers can combine with delay networks to form a microwave photonic filter, and becoming a finite response microwave photonic filter with relatively high Q factor when the number of the laser arrays or the wavelength number is large. By employing the microwave photonic filter in a close-loop, an optoelectronic oscillator with tunable bandwidth is made. CN103346469 A discloses a photo-electric oscillator. US2006067709 A1 discloses a system for a scanning antenna array in radar system. WO2009121967 A1 discloses a delay generator device. US2012250028 A1 discloses an optical coherence tomography system.

### Summary of the Invention

The object of the present invention is to provide a wholly optically controlled phased array radar transmitter based on optical delay units with integration of tunable optoelectronic oscillators and optically controlled wave beam forming networks. The invention is defined in the claims.

The technical solution of the present invention is as follows: A wholly optically controlled phased array transmitter with integration of tunable optoelectronic oscillators and optical time delay networks based on multi-wavelength optical sources and optical true time delay units, characterized in that it comprises: a multi-wavelength optical source, a first wavelength division multiplexer, a first optical splitter, a first electro-optic modulator, a second optical splitter, a first optical amplifier, a first optical time delay network, a photoelectric detector, an electric amplifier, a DC break, a second electro-optic modulator, a second optical amplifier, a second optical time delay network, an optical combiner, a second wavelength division multiplexer, a length of optical fiber, a photoelectric detector array, a T/R component array, a microwave antenna array, a 1×2 optical switch, a 2×2 optical switch, a circulator, a third wavelength division multiplexer, a precise length of optical fiber, and a faraday rotation mirror, where along the direction of laser output of said multi-wavelength optical source are arranged successively the first wavelength division multiplexer, the first optical splitter, the first electro-optic modulator, the second optical splitter, the second electro-optic modulator, the second optical amplifier, the second optical time delay network, the optical combiner, the second wavelength division multiplexer, the length of optical fiber, the photoelectric detector array, the T/R component array, and the microwave antenna array; a second output port of the second optical splitter is connected with an rf (radio frequency) input port of the first electro-optic modulator via successively the first optical amplifier, the first optical time delay network, the photoelectric detector, the electric amplifier, and the DC break; a second output port of the first optical splitter is connected with a second input port of the optical combiner, and a second input port of the second electro-optic modulator is a microwave input port.

The first optical time delay network or the second optical time delay network is connected in the following manner: a light transmitted from the first optical amplifier or the second optical amplifier is inputted via the 1×2 optical switch, and after gating, enters the third wavelength division multiplexer en route of the circulator; the third wavelength division multiplexer then multiplexes a signal of the light, and redistributes the light to various wavelengths, the light then passes through the precisely-cut fibers of various lengths, is finally reflected back by the faraday rotation mirror, and then passes again through the fibers, the third wavelength division multiplexer, and the circulator to arrive at the next optical switch.

The first optical splitter splits a laser light transmitted by the multi-wavelength optical source into two parts, the first part being utilized as an optical carrier for an optoelectronic oscillator, the second part being as an optical carrier for coherent demodulation.

An optical input port of the first electro-optic modulator is connected with a first output port of the first optical splitter, receives a portion of the signal of the optical carrier, and modulates the signal of the optical carrier, and the second optical splitter splits the modulated signal of the optical carrier into two. The first optical amplifier amplifies a portion of the signal of the light from the second output port of the second optical splitter. The first optical time delay network is connected to an output port of the first optical amplifier. The photoelectric detector transforms an optical signal of the first optical time delay network into an electric signal. The electric amplifier amplifies said transformed electric signal, feeds back again to the rf input port of the first electro-optic modulator, forming thus an optoelectronic oscillator, generates a tunable microwave signal as a microwave input signal for the first electro-optic modulator. In order to purge the dc remnants, a microwave dc break is inserted after the electric amplifier.

An optical input port of the second electro-optic modulator is connected to a first output port of the second optical splitter, taking an optical sideband and an optical carrier generated by the optoelectronic oscillator together as an optical carrier for the second electro-optic modulator, and in an microwave input port of the second electro-optic modulator is an electric signal related to radar signals (such as linear sweep pulse signals, phase-coded signals and so on). The second optical amplifier amplifies an optical signal loaded with microwave carrier and radar signals. The second optical time delay network is connected to an output port of the second optical amplifier for delaying a light of various wavelengths to generate phase differences. The optical combiner combines the optical signal passing through the second optical delay network with the second part of carrier split by the first optical splitter. The second wavelength division multiplexer multiplexes the optical signal passing through the optical combiner. The photoelectric detector demodulates an electric signal from each channel. The T/R component amplifies the electric signal, and the antenna radiates out the microwave signal.

The multi-wavelength optical source is a laser array or a multi-wavelength laser, among them a semi-conductor laser, an optical fiber laser, a gas laser, or a dye laser.

The wavelength division multiplexer is a dense wavelength division multiplexer, or an array waveguide grating multi/demultiplexers.

The optical splitter is an optical power splitter or an optical coupler, for splitting or combining optical signals.

The electro-optic modulator is an optical intensity modulator or an optical phase modulator. The optical intensity modulator is a single sideband modulator or an electro-absorption modulator.

The optical amplifier is an erbium-doped fiber amplifier, a semiconductor optical amplifier, or a Raman amplifier, for amplifying optical signals and effectively reducing insertion loss of a microwave photonic link.

The optically controlled beam-forming time delay network is a multi-wavelength based time delay network, and can be a multi-wavelength based optical true time delay network, a dispersive time delay network or a space time delay network based on dispersive devices, or a time delay network based on waveguide structures.

The photoelectric detector transforms optical signals to electric signals, and can be a PIN diode or an APD.

The electric amplifier can be a power amplifier or a low noise amplifier.

The T/R component is a transmitting and receiving unit, for low noise pre-amplification of radar transmission and reception signals.

The microwave antenna transmits and receives signals, and can be a half-wave dipole antenna.

The present invention has the following advantages:
1. The present invention is an optically controlled phased array radar system based on multi-wavelengths, by making use of time delay networks with the same structures simultaneously as a radar microwave generating optoelectronic oscillator and an optically controlled wave-beam forming structure, thus saving an external microwave source for generating microwave carriers, and is therefore advantageous with a compact structure and in reducing system cost.
2. In the present invention, microwave carrier signals of various microwave frequencies (such as: the L frequency, S frequency, X frequency, Ku frequency, K frequency, or the Ka frequency) can be generated by regulating the delay time of the first time delay network or the wavelength of the multi-wavelength laser. By switching the first time delay network or by changing the wavelength of the multi-wavelength laser, frequency hopping within the same frequency can be realized.
3. In the present invention, the multi-wavelength laser is respectively employed in the optoelectronic oscillator with a tunable broadband for generating broadband-tunable and frequency-adjustable radar microwave signals, for generating radar baseband signals, in the optically controlled wave-beam forming network for radar signals, and in the optical carrier of coherent demodulation. Lasers are effective and therefore reduce cost.

### Brief Description of the Drawings

Figure 1 is a schematic diagram of the wholly optically controlled phased array radar transmitter of the present invention.
Figure 2 is a schematic diagram of the optical time delay network based on multi-wavelength of the present invention.
Figure 3 shows responses of the optoelectronic oscillating unit of the wholly optically controlled phased array radar transmitter of the present invention with four channel wavelengths and an open loop. Time delay difference between the channels is 80ps, and the multi-wavelength lasers have the same power. The Figure (a) shows simulation data, while Figure (b) shows experiment data.

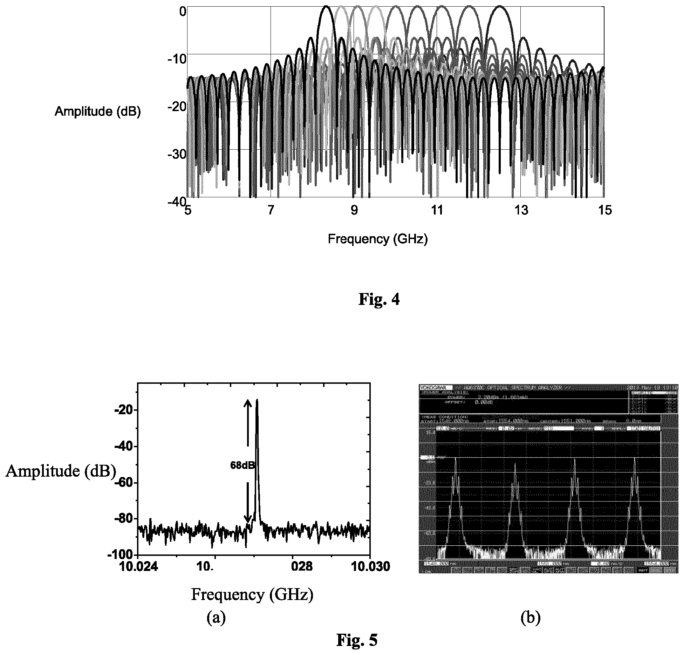

Figure 4 is an effect diagram of the optoelectronic oscillating unit of the wholly optically controlled phased array radar transmitter of the present invention working under four channel wavelengths and an open loop. Time delay increases from 80 to 120ps with a step of 5ps, simulating responses of microwave photonic filters.
Figure 5 shows (a) the microwave signals generated by the optoelectronic oscillating unit of the wholly optically controlled phased array radar transmitter of the present invention and (b) experiment data of the spectrogram thereof passing through the electro-optic modulator.

### Detailed Description of an Embodiment

In combination with drawings and an embodiment hereunder provided, the present invention will be further expounded. The embodiment, providing detailed implementation means and procedures thereof under prerequisite of the technical solution of the present invention, is not meant to limit the scope of the present invention.

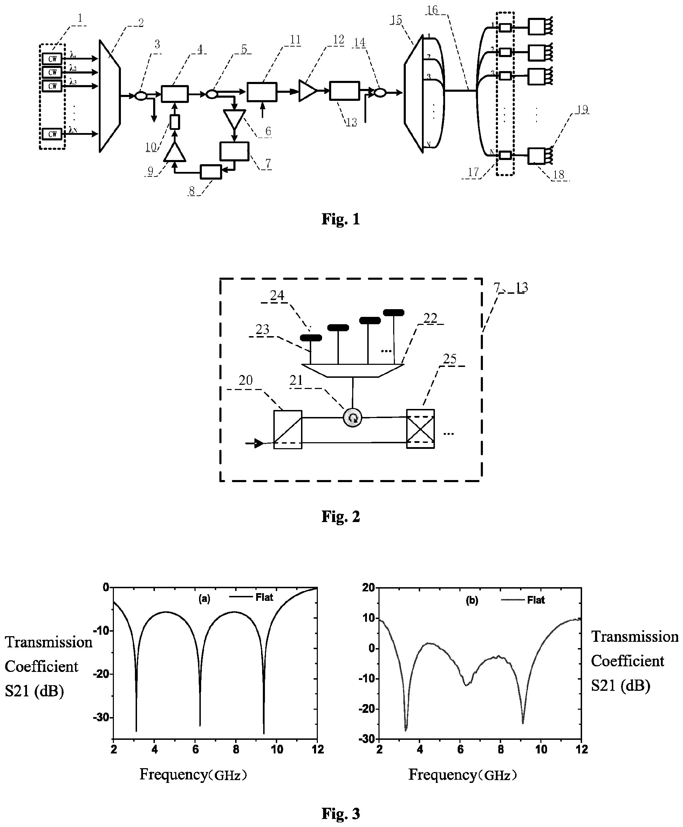

Figure 1 shows a schematic diagram of the wholly optically controlled phased array radar transmitter of the present invention. It comprises: a multi-wavelength optical source 1, a first wavelength division multiplexer 2, a first optical splitter 3, a first electro-optic modulator4, a second optical splitter 5, a first optical amplifier 6, a first optical time delay network 7, a photoelectric detector 8, an electric amplifier 9, a DC break 10, a second electro-optic modulator 11, a second optical amplifier 12, a second optical time delay network 13, an optical combiner 14, a second wavelength division multiplexer 15, a length of optical fiber 16, a photoelectric detector array 17, a T/R component array 18, a microwave antenna array 19, a 1×2 optical switch 20, a 2×2 optical switch 25, a circulator 21, a third wavelength division multiplexer 22, various precise lengths of optical fiber 23, and a faraday rotation mirror 24.

The fore-going components are connected in the following manner:
Optical signals of different wavelengths generated by the multi-wavelength optical source 1 are combined by the first waveguide array grating 2; a first output port of the first optical splitter 3 is connected with an optical input port of the first electro-optic modulator 4, and a part is split out of the combined optical signals to be inputted to the optical input port of the first electro-optic modulator 4, an optical output port thereof is connected to an input port of the first optical amplifier 6 via a second output port of the second optical splitter 5, the first optical amplifier of the embodiment being an erbium doped fiber amplifier. A part of light outputted from the second optical splitter 5 is amplified, so as to reduce insertion loss of the link; the first optical time delay network 7 has its input port connected with the output port of the first optical amplifier 6 and delay the part of light from a different channel for a different time; the part of light then enters the photoelectric detector 8 and is transformed from an optical signal to an electric signal; the low noise electric amplifier 9 amplifies the transformed electric signal, so as to increase the gain from the laser to the photoelectric detector, the electric signal then passes through the dc break 10 to be purged of the baseband signal, and is fed back to the rf input port of the first electro-optic modulator 4; at the mean time, the other part of light split by the output port of the second optical splitter 5 passes through the second electro-optic modulator 11, and is modulated with a modulated radar signal such as a linear chirp pulse signal or a phase coded signal inputted from a microwave input port of the second electro-optic modulator 11, and similarly passes through the second optical amplifier, that is, the erbium-doped fiber amplifier, is amplified thereby, and enters another set of the second optical time delay network 13, and is delayed similarly for a different time in respect of the different incoming channel of the light; the optical combiner 14 combines the signal phase-shifted by the time delay network with the second part of optical signal split by the first optical splitter 3, and the second waveguide array grating 15 demultiplexes the signals combined by the optical combiner 14; the length of optical fiber 16 transmits the optical signal to the antenna transmitting base, and the photoelectric detector array 17 restores the optical signal from each channel to an electric signal; the T/R component 18 preamplifies the photo-electrically detected electric signal; and the microwave antenna array 19 finally radiates out the microwave signal.

Wherein the time delay network is connected in the following manner: a light passing through EDFA1 and EDFA2 is inputted via the 1×2 optical switch (20), and after gating, enters the waveguide array grating (22) en route of the circulator (21); the waveguide array grating then multiplexes a signal of the light, and redistributes the light to various wavelengths, the light then passes through the precisely-cut various lengths of fiber (23), is finally reflected back by the faraday rotation mirror (24), and then passes again through the fibers (23), the waveguide array grating (22), and the circulator (21) to arrive at the next optical switch (25).

The working principle of the present invention is as follows:
First, a laser beam of various wavelengths generated by the multi-wavelength optical source and multiplexed via the AWG is inputted with an optical carrier signal in the electro-optic modulator, and the electro-optic modulator outputs the signal in two parts, one part as optically generated microwave to form an optoelectronic oscillator for generation of needed microwave carrier signals. The other part generates different delay times to form a wave-beam forming network.

For a optoelectronic oscillator, a laser of a different wavelength provides a different tap, while the time delay network provides a relative delay to form a microwave photonic filter with effective response, and as the number of laser wavelengths reaches a certain quantity, the 3dB of the passband thereof may become narrow enough, and albeit periodically responsive, by introducing low-pass response via employment of a photoelectric detector with a certain bandwidth, a single response microwave photonic filter is formed; thus it is a substitute of mode selection for a microwave filter in a traditional optoelectronic oscillator to form a close loop in response to the microwave photonic filter, and therefore becomes an optoelectronic oscillator for generation of required microwave signals. For the optoelectronic oscillator to start, an optical amplifier and a low noise amplifier are respectively inserted to amplify optical and electric signals, so as to reduce insertion loss in the open loop link from the laser to the photoelectric detector. Meanwhile, modulation in accordance with relative delay of the time delay network will generate a tunable microwave signal.

The tunable microwave signal generated by the fore-going optoelectronic oscillator is modulated via an RF input port of the first electro-optic modulator 4 to an optical carrier signal, the generated optical carrier together with a sideband signal passes through the second electro-optic modulator 11 and is modulated onto a radar signal, is amplified by the second optical amplifier 12 and then sent to the second optical time delay network 13, and is demultiplexed via the second waveguide array grating 15; thus, in each wavelength, there are four optical signal, an optical carrier, a radar-signal-modulated optical carrier, and two side bands (the difference in side frequency being that of the microwave carrier), and these four signals are sent to the photoelectric detector array 17 at the back end for modulation, the radar signal carried on the microwave carrier and detected by means of interference detection passes through the T/R component 18 and is transmitted out at last by the antenna array 19, completing the spatial wave-beam scanning. The above system generates microwave signals by means of time delay networks with similar structures, thus saves external microwave sources, and therefore results in compactness and simplicity of the structure of the optically controlled phased array, as well as in low cost.

The optoelectronic oscillator and the wave-beam forming delay network may have the same or a different structure. For example, they may both be in a topological structure comprised of an optical switch, a circulator, a waveguide array grating, and a faraday rotation mirror. They may also both be in a dispersive time delay structure comprised of optical fibers. And one of them may be in a topological structure comprised of an optical switch, a circulator, a waveguide array grating, and a faraday rotation mirror, while the other one be a fiber dispersive time delay network. Take the first case as an example, a true time delay line difference from a channel of the nth level waveguide array grating is incremented by 2ⁿ⁻¹ 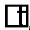 , and by controlling the various levels of optical switches, a time delay from 0 to 2ⁿ⁻¹ 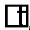 is realized. In consideration of their different requirement for time delay precision and time delay quantity, a time delay unit similar to a 2×2 switch can be cascaded subsequent to the optical switch 25, with the final unit adopting the 1×2 optical switch 20 for output.

## Claims

1. A wholly optically controlled phased array transmitter with integration of an optoelectronic oscillator and an optical time delay network based on a multi-wavelength optical source and an optical time delay network,
**characterized in that** said transmitter comprises: a multi-wavelength optical source (1), a first wavelength division multiplexer (2), a first optical splitter (3), a first electro-optic modulator (4), a second optical splitter (5), a first optical amplifier (6), a first optical time delay network (7), a photoelectric detector (8), an electric amplifier (9), a DC break (10), a second electro-optic modulator (11), a second optical amplifier (12), a second optical time delay network (13), an optical combiner (14), a second wavelength division multiplexer (15), a length of optical fiber (16), a photoelectric detector array (17), a transmitting and receiving, T/R, component array (18), a microwave antenna array (19), a 1×2 optical switch (20), a 2×2 optical switch (25), a circulator (21), a third wavelength division multiplexer (22), further optical fibers of various lengths (23), and a Faraday rotation mirror (24); wherein the first optical time delay network (7) or the second optical delay network (13) include said 1x2 optical switch (20), said circulator (21), said third wavelength division multiplexer (22), said further optical fibers of various lengths (23), said Faraday rotation mirror (24) and said 2x2 optical switch (25), wherein one output channel of the 1×2 optical switch (20) is connected with a first port of the circulator (21), one input channel of the 2×2 optical switch (25) is connected with a second port of the circulator (21), the other output channel of the 1×2 optical switch (20) is connected with the other input channel of the 2×2 optical switch (25);
wherein a third port of the circulator (21) is connected with an input port of the third wavelength division multiplexer (22), a plurality of outputs of the third wavelength division multiplexer (22) are connected with said optical fibers (23) of different lengths to achieve different time delays, the ends of the optical fibers (23) are connected with the Faraday rotation mirror (24) for signal reflection:
wherein along the direction of laser output of said multi-wavelength optical source (1) are arranged successively the first wavelength division multiplexer (2), the first optical splitter (3), the first electro-optic modulator (4), the second optical splitter (5), the second electro-optic modulator (11), the second optical amplifier (12), the second optical time delay network (13), the optical combiner (14), the second wavelength division multiplexer (15), the length of optical fiber (16), the photoelectric detector array (17), the T/R component array (18), and the microwave antenna array (19); wherein a second output port of the second optical splitter (5) is connected with an radio frequency input port of the first electro-optic modulator (4) successively via the first optical amplifier (6), the first optical time delay network (7), the photoelectric detector (8), the electric amplifier (9), and the DC break (10) to form a close loop as an optoelectronic oscillator for generating a microwave signal; wherein a second output port of the first optical splitter (3) is connected with a second input port of the optical combiner (14), wherein a first input port of the optical combiner (14) is connected with the second optical time delay network (13) and an output of the optical combiner is connected with the second wavelength division multiplexer (15), and a second input port of the second electro-optic modulator (11) is a microwave input port.

2. The wholly optically controlled phased array transmitter of Claim 1, **characterized in that** the first optical time delay network (7) or the second optical time delay network (13) is connected in such manner to allow light transmission so that a light transmitted from the first optical amplifier (6) or the second optical amplifier (12) is inputted via the 1×2 optical switch (20), and after gating, enters the third wavelength division multiplexer (22) en route of the circulator (21); the third wavelength division multiplexer then multiplexes an optical signal of the light, and redistributes the light to various wavelengths, the light then passes through the further optical fibers of various length (23), is finally reflected back by the Faraday rotation mirror (24), and then passes again through the fibers (23), the third wavelength division multiplexer (22), and the circulator (21) to arrive at the next optical switch (25).

3. The wholly optically controlled phased array transmitter of Claim 1, **characterized in that** the multi-wavelength optical source is a laser array or a multi-wavelength laser, there-among a semi-conductor laser, an optical fiber laser, a gas laser, or a dye laser.

4. The wholly optically controlled phased array transmitter of Claim 1, **characterized in that** the wavelength division multiplexer is a dense wavelength division multiplexer or an array waveguide grating multi/demultiplexer.

5. The wholly optically controlled phased array transmitter of Claim 1, **characterized in that** the optical splitter/combiner is an optical coupler or an optical power splitter.

6. The wholly optically controlled phased array transmitter of Claim 1, **characterized in that** the optical amplifier is an erbium-doped fiber amplifier, a semiconductor optical amplifier, or a Raman amplifier.

7. The wholly optically controlled phased array transmitter of Claim 1, **characterized in that** the electro-optic modulator is an optical intensity modulator, a single sideband modulator or an electro-absorption modulator; and the modulator is a lithium niobate Mach-Zehnder modulator or a polymer structure modulator.

8. The wholly optically controlled phased array transmitter of Claim 1, **characterized in that** the optical time delay network is a multi-wavelength based optical true time delay network, an optical-fiber-based dispersive time delay network, a fiber-Bragg-grating based dispersive time delay network, an optical space-based time delay network, a planar-waveguide-structure based time delay network, or a time delay network based on silicon based waveguide structures.

9. The wholly optically controlled phased array transmitter of Claim 1, **characterized in that** the photoelectric detector is a PIN diode or an APD, avalanche photodiode.

10. The wholly optically controlled phased array transmitter of Claim 1, **characterized in that** the electric amplifier is a broadband amplifier, a low noise amplifier, or a driver amplifier for a modulator.

## Patentansprüche

1. Vollständig optisch gesteuerter Phase-Array-Sender mit Integration eines optoelektronischen Oszillators und eines optischen Zeitverzögerungsnetzwerks auf der Basis einer optischen Quelle mit mehreren Wellenlängen und eines optischen Zeitverzögerungsnetzwerks,
**dadurch gekennzeichnet ist, dass**
der Sender umfasst: eine optische Quelle mit mehreren Wellenlängen (1) einen ersten Wellenlängenteilungsmultiplexer (2), einen ersten optischen Teiler (3), einen ersten elektrooptischen Modulator (4), einen zweiten optischen Teiler (5), einen ersten optischen Verstärker (6), ein erstes optisches Zeitverzögerungsnetzwerk (7), einen photoelektrischen Detektor (8), einen elektrischen Verstärker (9), eine Gleichstromunterbrechung (10), einen zweiten elektrooptischen Modulator (11), einen zweiten optischen Verstärker (12), ein zweites optisches Zeitverzögerungsnetzwerk (13), einen optischen Kombinierer (14), einen zweiten Wellenlängenteilungsmultiplexer (15), optische Fasern (16) mit einer Länge, eine photoelektrische Detektoranordnung (17), ein Sende- und Empfangs-T/R-Komponentenarray (18), eine Mikrowellenantennenanordnung (19), ein optischer 1×2-Schalter (20), ein 2x2-optischer Schalter (25), ein Zirkulator (21), ein dritter Wellenlängenteilungsmultiplexer (22), mehrere optische Fasern verschiedener Längen (23) und ein Faraday-Rotationsspiegel (24);
wobei das erste optische Zeitverzögerungsnetzwerk (7) oder das zweite optische Zeitverzögerungsnetzwerk (13) den optischen 1 x2-Schalter (20), den Zirkulator (21), den dritten Wellenlängenteilungsmultiplexer (22), mehrere optische Fasern verschiedener Längen (23), den Faraday-Rotationsspiegel (24) und den 2x2-optischer Schalter (25) umfassen,
wobei ein Ausgangskanal des optischen 1x2-Schalters (20) mit einem ersten Anschluss des Zirkulators (21) verbunden ist, ein Eingangskanal des optischen 2x2-Schalters (25) mit einem zweiten Anschluss des Zirkulators (21) verbunden ist, der andere Ausgangskanal des optischen 1x2-Schalters (20) ist mit dem anderen Eingangskanal des optischen 2x2-Schalters (25) verbunden;
wobei ein dritter Anschluss des Zirkulators (21) mit einem Eingangsanchluss des dritten Wellenlängenteilungsmultiplexers (22) verbunden ist, eine Vielzahl von Ausgängen des dritten Wellenlängenteilungsmultiplexers (22) mit optischen Fasern (23) von verschiedener Länge verbunden sind, um verschiedene Zeitverzögerungen zu erreichen, die Enden der optischen Fasern (23) sind zur Signalreflexion mit dem Faraday-Rotationsspiegel (24) verbunden;
wobei entlang der Richtung der Laserausgabe der optischen Quelle (1) mit mehreren Wellenlängen nacheinander der erste Wellenlängenteilungsmultiplexer (2), der erste optische Splitter (3), der erste elektrooptische Modulator (4) und der zweite optische Splitter (5), der zweite elektrooptische Modulator (11), der zweite optische Verstärker (12), das zweite optische Zeitverzögerungsnetzwerk (13), der optische Kombinierer (14), der zweite Wellenlängenteilungsmultiplexer (15), die optischen Fasern mit einer Länge (16), das photoelektrischen Detektorarray (17), das T/R-Komponentenarray (18) und das Mikrowellenantennenarray (19) angeordnet sind; wobei ein zweiter Ausgangsanschluss des zweiten optischen Teilers (5) nacheinander über den ersten optischen Verstärker (6), das erste optische Zeitverzögerungsnetzwerk (7), den photoelektrischen Detektor (8), den elektrischen Verstärker (9) und die Gleichstromunterbrechung (10) mit einem Hochfrequenzeingangsanschluss des ersten elektrooptischen Modulators (4) verbunden ist, um eine enge Schleife als optoelektronischer Oszillator zum Erzeugen eines Mikrowellensignals zu bilden; wobei ein zweiter Ausgangsanschluss des ersten optischen Teilers (3) mit einem zweiten Eingangsanschluss des optischen Kombinierers (14) verbunden ist, wobei ein erster Eingangsanschluss des optischen Kombinierers (14) mit dem zweiten optischen Zeitverzögerungsnetzwerk (13) verbunden ist und ein Ausgang des optischen Kombinierers ist mit dem zweiten Wellenlängenteilungsmultiplexer (15) verbunden, und ein zweiter Eingangsanschluss des zweiten elektrooptischen Modulators (11) ein Mikrowelleneingangsanschluss ist.

2. Vollständig optisch gesteuerter Phase-Array-Sender nach Anspruch 1,
**dadurch gekennzeichnet, dass**
das erste optische Zeitverzögerungsnetzwerk (7) oder das zweite optische Zeitverzögerungsnetzwerk (13) derart verbunden ist, dass eine Lichtübertragung möglich ist, so dass von dem ersten optischen Verstärker (6) oder dem zweite optischen Verstärker (12) übertragenes Licht über den optischen 1×2-Schalter (20) eingegeben ist und nach dem Ansteuern in den dritten Wellenlängenteilungsmultiplexer (22) auf dem Weg des Zirkulators (21) eintritt; der dritte Wellenlängenteilunsmultiplexer multiplext dann ein optisches Lichtsignal und verteilt das Licht auf verschiedene Wellenlängen, dann passiert das Licht die weiteren optischen Fasern verschiedener Längen (23) und wird schließlich vom Faraday-Rotationsspiegel (24) zurückreflektiert und geht dann erneut durch die Fasern (23), den dritten Wellenlängenteilungsmultiplexer (22) und den Zirkulator (21), um zum nächsten optischen Schalter (25) zu gelangen.

3. Vollständig optisch gesteuerter Phase-Array-Sender nach Anspruch 1,
**dadurch gekennzeichnet, dass**
die optische Quelle mit mehreren Wellenlängen ein Laserarray oder ein Laser mit mehreren Wellenlängen ist, darunter ein Halbleiterlaser, ein optischer Faserlaser, ein Gaslaser oder ein Farbstofflaser.

4. Vollständig optisch gesteuerter Phase-Array-Sender nach Anspruch 1,
**dadurch gekennzeichnet, dass**
der Wellenlängenteilungsmultiplexer ein dichter Wellenlängenteilungsmultiplexer oder ein Array-Wellenleitergitter-Multi-/Demultiplexer ist.

5. Vollständig optisch gesteuerter Phase-Array-Sender nach Anspruch 1,
**dadurch gekennzeichnet, dass**
der optische Splitter/Kombinierer ein optischer Koppler oder ein optischer Leistungsteiler ist.

6. Vollständig optisch gesteuerter Phase-Array-Sender nach Anspruch 1,
**dadurch gekennzeichnet, dass**
der optische Verstärker ein Erbium-dotierter Faserverstärker, ein optischer Halbleiterverstärker oder ein Raman-Verstärker ist.

7. Vollständig optisch gesteuerter Phase-Array-Sender nach Anspruch 1,
**dadurch gekennzeichnet, dass**
der elektrooptische Modulator ein optischer Intensitätsmodulator, ein Einzelseitenbandmodulator oder ein Elektroabsorptionsmodulator ist; und der Modulator ist ein Lithiumniobat-Mach-Zehnder-Modulator oder ein Polymerstrukturmodulator.

8. Vollständig optisch gesteuerter Phase-Array-Sender nach Anspruch 1,
**dadurch gekennzeichnet, dass**
das optische Zeitverzögerungsnetzwerk ein optisches Zeitverzögerungsnetzwerk auf Basis mehrerer Wellenlängen, ein auf optischen Fasern basierendes dispersives Zeitverzögerungsnetzwerk und ein auf Faser-Bragg-Gittern basierendes, dispersives Zeitverzögerungsnetzwerk ist, ein optisches raumbasiertes Zeitverzögerungsnetzwerk, ein auf einer planaren Wellenleiterstruktur basierendes Zeitverzögerungsnetzwerk oder ein Zeitverzögerungsnetzwerk, das auf Wellenleiterstrukturen auf Siliziumbasis basiert.

9. Vollständig optisch gesteuerter Phase-Array-Sender nach Anspruch 1,
**dadurch gekennzeichnet, dass**
der fotoelektrische Detektor eine PIN-Diode oder eine APD, Lawinenphotodiode ist.

10. Vollständig optisch gesteuerter Phase-Array-Sender nach Anspruch 1,
**dadurch gekennzeichnet, dass**
der elektrische Verstärker ein Breitbandverstärker, ein rauscharmer Verstärker oder ein Treiberverstärker für einen Modulator ist.

## Revendications

1. Un émetteur à commande entièrement optique à réseau en phase avec intégration d'un oscillateur optoélectronique et d'un réseau optique à retardement basé sur une source optique multi-longueurs d'onde et un réseau optique à retardement,
**caractérisé en ce que** ledit émetteur comprend : une source optique multi-longueurs d'onde (1), un premier multiplexeur en longueur d'onde (2), un premier séparateur optique (3), un premier modulateur électro-optique (4), un second séparateur optique (5), un premier amplificateur optique (6), un premier réseau optique à retardement (7), un détecteur photoélectrique (8), un amplificateur électrique (9), un coupe-circuit (10), un second modulateur électro-optique (11), un deuxième réseau optique amplifier (12), un deuxième réseau optique à retardement (13), un combinateur optique (14), un deuxième multiplexeur en longueur d'onde (15), une longueur de fibre optique (16), un réseau de détecteurs photoélectriques (17), un réseau de composants T/R d'émission et de réception (18), un réseau d'antennes hyperfréquences (19), un commutateur optique 1x2 (20), un commutateur optique 2x2 (25), un circulateur (21), un troisième multiplexeur de longueur d'onde (22), autres fibres optiques de différentes longueurs (23), et un miroir à rotation de Faraday (24) ;
où 1 le premier réseau optique à retardement (7) ou le second réseau optique à retardement (13) comprennent ledit commutateur optique 1x2 (20), ledit circulateur (21), ledit troisième multiplexeur de longueur d'onde (22), lesdites autres fibres optiques de différentes longueurs (23), ledit miroir de rotation de Faraday (24) et ledit commutateur optique 2x2 (25), dans lequel un canal de sortie du commutateur optique 1x2 (20) est connecté à un port first du circulateur (21), un canal d'entrée du commutateur optique 2x2 (25) est connecté à un deuxième port du circulateur (21), l'autre canal de sortie de le commutateur optique 1x2 (20) est connecté à l'autre canal d'entrée du 2x2 commutateur optique (25) ;
dans lequel un troisième port du circulateur (21) est connecté à un port d'entrée du troisième multiplexeur de longueur d'onde (22), une pluralité de sorties du troisième multiplexeur de longueur d'onde (22) sont connectées auxdites fibres optiques (23) de différentes longueurs pour obtenir différents retards, les extrémités des fibres optiques (23) sont connectées au miroir de rotation de Faraday (24) pour la réflexion du signal ;
dans lequel le long de la direction de la sortie laser de ladite source optique multi-longueurs d'onde (1) sont disposés successivement le premier multiplexeur à division de longueur d'onde (2), le séparateur optique first (3), le premier modulateur électro-optique (4), le second séparateur optique (5), le second modulateur électro-optique (11), le second amplificateur optique (12), le second réseau optique à retardement (13), le combinateur optique (14), le second multiplexeur à division de longueur d'onde (15), la longueur de la fibre optique (16), le réseau de détecteurs photoélectriques (17), le réseau de composants T/R (18) et le
réseau d'antennes hyperfréquences (19) ; dans lequel un deuxième port de sortie de la deuxième le séparateur (5) est connecté à un port d'entrée de radiofréquence de la première électro-optique modulateur (4) successivement via le premier amplificateur optique (6), le premier temps optique (7), le détecteur photoélectrique (8), le réseau électrique amplifier (9), et le DC break (10) pour former une boucle fermée en tant qu'oscillateur optoélectronique pour générer un signal hyperfréquence ; dans lequel un deuxième port de sortie du premier séparateur optique (3) est connecté à un deuxième port d'entrée du combinateur optique (14), dans lequel un premier le port d'entrée du combinateur optique (14) est connecté au deuxième temps optique (13) et une sortie du combinateur optique est connectée au second multiplexeur à division de longueur d'onde (15), et un second port d'entrée du second Le modulateur électro-optique (11) est un port d'entrée micro-ondes.

2. L'émetteur à commande entièrement optique à commande de phase de la revendication 1,
**caractérisé en ce que** le réseau optique à retardement first (7) ou le deuxième réseau optique à retardement (13) est connecté de manière à permettre la transmission de la lumière de sorte qu'une lumière transmise par le premier amplificateur optique (6) ou le deuxième amplificateur optique (12) est entrée par le commutateur optique 1x2 (20), et après la fermeture, entre dans le troisième multiplexeur à division de longueur d'onde (22) en passant par le circulateur (21) ; le troisième multiplexeur en longueur d'onde multiplexe ensuite un signal optique de la lumière, et redistribue la lumière à différentes longueurs d'onde, la lumière passe ensuite à travers les autres fibres optiques de différentes longueurs (23), est finally reflected de retour par le miroir de rotation de Faraday (24), et passe ensuite à nouveau à travers les fibres (23), le troisième multiplexeur en longueur d'onde (22), et le circulateur (21) pour arriver au commutateur optique suivant (25).

3. L'émetteur à commande entièrement optique à commande de phase de la revendication 1,
**caractérisé en ce que** la source optique à plusieurs longueurs d'onde est un réseau laser ou un laser à plusieurs longueurs d'onde, parmi lesquels un laser à semi-conducteur, un laser à fibre optique, un laser à gaz ou un laser à colorant.

4. L'émetteur à commande entièrement optique à commande de phase de la revendication 1,
**caractérisé en ce que** le multiplexeur en longueur d'onde est un multiplexeur en longueur d'onde dense ou un multi/démultiplexeur à réseau de guides d'ondes.

5. L'émetteur à commande entièrement optique à commande de phase de la revendication 1,
**caractérisé en ce que** le séparateur/combineur optique est un coupleur optique ou un séparateur de puissance optique.

6. L'émetteur à commande entièrement optique à commande de phase de la revendication 1,
**caractérisé en ce que** l'amplificateur optique est un amplificateur fiber dopé à l'erbium, un amplificateur optique à semi-conducteur ou un amplificateur Raman.

7. L'émetteur à commande entièrement optique à commande de phase de la revendication 1,
**caractérisé en ce que** le modulateur électro-optique est un modulateur d'intensité optique, un modulateur à bande latérale unique ou un modulateur à électro-absorption ; et le modulateur est un modulateur Mach-Zehnder au niobate de lithium ou un modulateur à structure polymère.

8. L'émetteur à commande entièrement optique à commande de phase de la revendication 1,
**caractérisé en ce que** le réseau optique à retardement est un réseau optique à retardement réel basé sur plusieurs longueurs d'onde, un réseau à retardement dispersif basé sur des fibres optiques, un réseau à retardement dispersif basé sur fiber-Bragg-grating, un réseau optique à retardement spatial, un réseau à retardement basé sur une structure de guide d'ondes planaire ou un réseau à retardement basé sur des structures de guide d'ondes en silicium.

9. L'émetteur à réseau en phase entièrement contrôlé optiquement de la revendication 1, **caractérisé en ce que** le détecteur photoélectrique est une diode PIN ou une photodiode à avalanche APD.

10. Emetteur à commande entièrement optique à commande de phase selon la revendication 1, **caractérisé en ce que** l'amplificateur électrique est un amplificateur à large bande, un amplificateur à faible bruit ou un amplificateur de commande pour un modulateur.
